Europäisches Patentamt

European Patent Office

Office européen des brevets

(19)

(11) Veröffentlichungsnummer : **0 106 362**
**B1**

(12) # EUROPÄISCHE PATENTSCHRIFT

(45) Veröffentlichungstag der Patentschrift :
**10.02.88**

(21) Anmeldenummer : **83110399.9**

(22) Anmeldetag : **19.10.83**

(51) Int. Cl.⁴ : **B 65 D   1/28**, B 32 B 15/08,
B 32 B 27/32

(54) **Tiefgezogener, kunststoffbeschichteter Aluminiumbehälter.**

(30) Priorität : 20.10.82 DE 3238755
27.11.82 DE 8233393 U

(43) Veröffentlichungstag der Anmeldung :
25.04.84 Patentblatt 84/17

(45) Bekanntmachung des Hinweises auf die Patenterteilung : 10.02.88 Patentblatt 88/06

(84) Benannte Vertragsstaaten :
AT CH DE FR GB LI NL SE

(56) Entgegenhaltungen :
DE-A- 1 803 977
DE-A- 2 757 370

(73) Patentinhaber : VEREINIGTE ALUMINIUM-WERKE
AKTIENGESELLSCHAFT
Berlin - Bonn Postfach 2468 Georg-von-Boeselager-
Strasse 25
D-5300 Bonn 1 (DE)

(72) Erfinder : Hocks, Klaus, Dipl.-Ing.
Schirnerstrasse 25
D-4048 Grevenbroich 1 (DE)
Erfinder : Singe, Thomas, Dipl.-Chem. Dr.
Südstrasse 5
D-5357 Swisttal-Odendorf (DE)
Erfinder : Herbst, Thea-Barbara, Dipl.-Ing.
Karl-Oberbach-Strasse 2
D-4048 Grevenbroich 1 (DE)

(74) Vertreter : Müller-Wolff, Thomas, Dipl.-Ing.
c/o Vereinigte Aluminium-Werke AG Patentabteilung
Postfach 2468
D-5300 Bonn 1 (DE)

Jouve, 18, rue St-Denis, 75001 Paris, France

## Beschreibung

Die Erfindung betrifft einen einteiligen tiefgezogenen, kunststoffbeschichteten Aluminiumbehälter zur Aufnahme sterilisierbarer Nahrungsmittel oder anderer licht-, sauerstoff- oder aromaempfindlicher Füllgüter.

Tiefgezogene Aluminium-Kunststoffbehälter sind bekannt und werden seit mehr als 15 Jahren als Verpackungsbehälter für konservierbare Lebensmittel wie Fisch, Fleischwaren, Fertiggerichte oder Fertigmenüs eingesetzt. Diese bekannten Behälter bestehen aus einem Aluminium-Kunststofflaminat, bei welchem ein Aluminiumband auf der behältereinwärts gerichteten Seite mittels sogenannter Zweikomponentenklebstoffe, z. B. aus Basis Polyester- oder Polyätherurethan, mit einer Kunststoffolie, vorwiegend einer nichtorientierten Polypropylenfolie, verbunden ist.

Der Nachteil dieser bekannten Behälter besteht zum einen darin, daß das Aluminium-Kunststofflaminat in der Regel aus 5 Schichten besteht, was einen aufwendigen Arbeitsprozeß bei der Herstellung des Laminates beinhaltet. Diese fünf Schichten stellen sich bei dem aus dem Laminat tiefgezogenen Behälter von der Außen- zur Innenlage wie folgt dar : Schutzlack — Aluminiumband — Haftvermittler — Kaschierkleber — Polypropylenfolie. Abgesehen von dem aufwendigen Fertigungsverfahren muß als Nachteil empfunden werden, daß die bekannten Klebstoffsysteme zum Erreichen ihres optimalen Haftvermögens einen Zeitraum von bis zu drei Wochen bei Normaltemperatur benötigen. Dies bedeutet, daß der Hersteller für den Verbund Aluminium-Polypropylenfolie lange Fertigungszeiten berücksichtigen muß. Zusätzlich muß erwähnt werden, daß die Klebstoffsysteme in ihrer Härterkomponete aromatische Isocyanate enthalten, welche in vielen außereuropäischen Ländern nicht zur Herstellung von Lebensmittelverpackungen für Konserven zugelassen sind. Das bedeutet absehrare Liefereinbußen sowohl für den Laminathersteller als auch für den Hersteller vorgefertigter Behälter oder gefüllter Behälter.

Die DE-OS 27 57 370 beschreibt die Herstellung von Kunststoff-Aluminium-Verbundfolien, die u. a. nach der Tiefziehtechnik weiterverarbeitet werden. Dabei ist allerdings das Kunststoffmaterial die den Verarbeitungsprozeß im wesentlichen bestimmende Materialschicht, denn der Verbundkörper besteht aus einer Kunststoff-Folie mit bis zu 4 mm Dicke, während die Aluminiumfolie vorzugsweise 20 μm dick ist und im wesentlichen als Gassperre eingesetzt wird. Der bekannte Verbundkörper soll bevorzugt aus mindestens zwei Kunststoffschichten und einer bis zu 1 μm dicken Aluminiumfolie aufgebaut sein. Derartige Verbundkörper lassen sich nur nach einer Wärmebehandlung tiefziehen. Zusätzlich sind die Verformungsmöglichkeiten dieser Verbundfolie sehr beschränkt, und zwar sowohl in Bezug auf die Form der Behälter, auf die Behälter-Tiefe als auch auf die Ausführung der Behälter.

Aus der DE-AS 23 61 506 ist es bekannt, Propylenpolymerisate mit bestimmten Mischungsverhältnissen von kristallinen und amorphen Anteilen zum Heißbeschichten von Papier- und Metallfolien auf Walzenbeschichtungsmaschinen zu verwenden. Außerdem enthalten die Polypropylenmischungen Zusätze in Form von Kohlenwasserstoffwachsen und anderen Aditiven, welche diese Polypropylene nur für die Walzenbeschichtung verwendbar machen. Die Verarbeitungstemperaturen liegen hierbei weit unterhalb der bei Extrusionsbeschichtungen üblichen Temperaturen, was ermöglicht wird durch die vergleichsweise geringen Schmelzviskositäten.

Ferner ist aus der DE-OS 26 14 660 ein tiefgezogener Verpackungsbehälter aus einem Metall-Kunststoff-Verbundmaterial bekannt, dessen Metallschicht ausschließlich an ihrer behältereinwärts gerichteten Oberfläche mit einer Kunststoffolie kaschiert ist, wobei die Metallschicht eine Dicke von 0,043 bis 0,3 mm hat und die Kunststoffolie biaxial orientiert ist sowie eine Dicke von 0,008 bis 0,025 mm hat. Zur Herstellung des Verbundes werden vorgefertigte Aluminium- und Polypropylenbahnen benötigt, wobei die Kunststoffolie und die Metallschicht mit einem Kunstharzkleber, z. B. auf der Basis Polyurethan verklebt ist.

Nach der DE-OS 18 03 977 wird ein Verpackungsmaterial/Einwickelmaterial beschrieben, wobei man Polyolefinharze mit einem Haftvermittler auf Aluminiumfolien aufträgt. Nach DIN 1784 Blatt 3 versteht man unter Folien Materialdicken von < 0,020 mm — also flexibles, papierähnliches Material, das sich beispielsweise zum Einwickeln von Lebensmitteln eignet. Es wird kein Hinweis gegeben, daß das Verpackungsmittel für konservierbare Lebensmittel, d. h. Lebensmittel mit einer Mindesthaltbarkeit von 1 bis 2 Jahren, eingesetzt wird.

Zum Stand der Technik gehören auch Verfahren und Materialien zum Beschichten von Metalloberflächen mit Kunststoff gemäß DE-OS 28 38 503, 21 35 027, 26 39 290 sowie die in der DE-OS 29 46 171 beschriebenen mehrschichtigen Verpackungsfolien. In keiner der zitierten Schriften wird jedoch ein mit Kunststoff beschichteter, tiefgezogener, einteiliger Aluminiumbehälter beschrieben oder ist daraus ableitbar.

Der Erfindung liegt die Aufgabe zugrunde, einen tiefziehbaren, einteiligen, mit Kunststoff beschichteten Aluminiumbehälter zu schaffen, welcher in einfacher Weise herstellbar und zur Aufnahme sterilisierbarer Nahrungsmittel und anderer licht-, sauerstoff- oder aromaempfindlicher Füllgüter geeignet ist und der mit einem Dickel bei niedriger Siegelnahtfestigkeit verschließbar ist.

Die Aufgabe wird erfindungsgemäß durch die im Patentanspruch angegebenen Merkmale gelöst. Es hat sich gezeigt, daß die Extrusionsbeschichtung mit Polypropylen im Gegensatz zu den bisher verwendeten Polypropylenfolienkaschierungen einen einfachen und sicheren Arbeitsprozeß darstellt, der für die Massenfertigung von Aluminium-Kunststoffbehältern hervorragend geeignet ist. Die bei der Verwendung der bisher üblichen Klebstoffsysteme auftretenden nachteiligen Eigenschaften können vermieden werden. Ferner gestattet die zwischen Behälter und Deckel wirksame niedrige Siegelnahtfestigkeit ein leichtes Aufreißen des Deckels.

Im folgenden wird die Erfindung anhand mehrer Ausführungsbeispiele näher erläutert. Der erfindungsgemäße Behälter kann aus einem Aluminiumband von 0,110 mm Dicke bestehen, wobei es sich um Aluminium normaler Reinheit oder um eine Aluminiumlegierung handeln kann. Das Aluminiumband ist auf der Behälteraußenseite mit einem hochwertigen Schutzlack versehen, der die erforderlichen Eigenschaften, wie Verformbarkeit, Hitzefestigkeit und Sterilisationsbeständigkeit, erfüllt. Auf der Behälterinnenseite ist das Aluminiumband mit z. B. 50 g/m² Polypropylen extrusionsbeschichtet.

Polypropylen ist im Gegensatz zu Polyäthylen bei der Extrusionsbeschichtung nicht ohne eine haftvermittelnde Zwischenschicht, sogenannte Primerschicht, mit Aluminium zu verbinden. Als besonders günstig erwies sich eine Primerschicht, welche als Lack oder Dispersion modifiziertes Polypropylen enthält. Eine derartige Dispersion ist z. B. unter dem Handelsnamen « Moreprime » bekannt.

Die haftvermittelnde Zwischenschicht oder Primerschicht wurde bei dem erfindungsgemäßen Behälter mit einem Trockengewicht von 1 bis 2 g/m² aufgetragen.

Es wurde nun überraschend gefunden, daß sich aus dem mit Polypropylen mittels Extrusion beschichteten Aluminiumband durch Tiefziehen Behälter herstellen ließen. Dies ist umso erstaunlicher, da man bei dem derzeitigen Stand der Technik davon ausgeht, daß für den Tiefziehprozeß auch der Kunststoff besonders verformungsfreudig sein soll, d. h. Schmier- bzw. Gleiteigenschaften aufweisen muß. Derartige Gleit- bzw. Verformungsfreudigkeit wurde bisher nur für Kunststofffolien vorausgesetzt. Es zeigte sich jedoch, daß das mit Polypropylen extrusionsbeschichtete Band zu den unterschiedlichsten Behälterformen, rund, rechteckig oder quadratisch tiefgezogen werden konnte, wobei Behälter bis zu einem Fassungsvermögen von 455 ccm Inhalt hergestellt wurden. Das Tiefziehen erfolgte auf handelsüblichen Pressen, auf welchen die bekannten Aluminium-Polypropylenfolienbehälter hergestellt werden, ohne daß grundlegende Veränderungen an den Werkzeugen vorgenommen werden mußten. Es zeigte sich, daß der Druck der Werkzeuge nur geringfügig reduziert werden mußte, um einwandfreie tiefgezogene Behälter zu erhalten.

Zum Verschließen der Behälter durch Heißversiegelung im Wärmekontaktverfahren wurden Deckelmaterialien der unterschiedlichsten Ausführungen gewählt : 1. Eine Materialkombination bestand aus dem gleichen Aufbau wie der Behälter, d. h. Aluminiumband von 0,110 mm Dicke auf der dem Behälterinnern zugekehrten Seite mit 50 g/m² Polypropylen durch Extrusion beschichtet. 2. Der Deckel bestand aus Aluminiumband, welches sowohl gegen nicht orientierte Polypropylenfolie von 0,050 mm Dicke oder gegen biaxial orientierte Polypropylenfolie von 0,015 mm Dicke laminiert worden war. 3. Als weitere Deckelvariante wurde ein heißsiegelfähig lackiertes Aluminiumband verwendet.

Konstante Siegelbedingungen : Temperatur unteres Siegelwerkzeug 90 °C

| Siegelzeit | 1 sec. |
| Druck | 100 kp |

Deckelvariante 1 : Aluminiumband 0,110 mm, extrusionsbeschichtet mit 50 g/m² Polypropylen
Deckelvariante 2 : Aluminiumband 0,090 mm, laminiert gegen 0,050 mm Polypropylenfolie
Deckelvariante 3 : Aluminiumband 0,050 mm, laminiert gegen 0,015 mm biaxial orientierte Polypropylenfolie
Deckelvariante 4 : Aluminiumband 0,050 mm, heißsiegelfähig lackiert (5 g/m² Heißsiegellack)

Tabelle 1

Behältermaterial Aluminiumband 0,110 mm, extrusionsbeschichtet mit 50 g/m² Polypropylen. Die Varianten 1 bis 4 der oben beschriebenen Deckelmaterialien weisen folgende Siegelnahtfestigkeiten in N pro 15 mm auf :

| Siegeltemperatur[+)] °C | Variante 1 | Var. 2 | Var. 3 | Var. 4 |
|---|---|---|---|---|
| 250 | 12,5 | 14,0 | 12,6 | 12,9 |
| 270 | 15,2 | 13,9 | 14,3 | 12,7 |
| 290 | 15,3 | 15,8 | 13,9 | 14,8 |
| 310 | 15,5 | 15,3 | 16,1 | 16,0 |

[+)] Temperatur oberes Siegelwerkzeug

# 0 106 362

### Tabelle 2

Behältermaterial Aluminiumband 0,110 mm, laminiert gegen 0,050 mm Polypropylenfolie. Die Varianten 2 bis 4 der oben beschriebenen Deckelmaterialien weisen folgende Siegelnahtfestigkeiten in N pro 15 mm auf.

| Siegeltemperatur[+] °C | Variante 2 | Variante 3 | Variante 4 |
|---|---|---|---|
| 250 | 33,5 | 22,7 | 12,7 |
| 270 | 35,1 | 24,2 | 13,0 |
| 290 | 44,3 | 22,8 | 14,6 |
| 310 | 41,0 | 20,3 | 15,3 |

[+]) Temperatur oberes Siegelwerkzeug

Bei der Überprüfung der Siegelnahtfestigkeiten wurde nun erstaunlicherweise gefunden, daß unabhängig von der Art des Deckelmaterials gleichbleibende niedrige Festigkeitswerte erhalten wurden, sehr zum Unterschied bei den laminierten Aluminium-Polypropylenfolienbehältern.

Diese gleichmäßigen niedrigen Siegelnahtfestigkeitswerte gestatten erstmals eine leichte Aufreißmöglichkeit, welche von der Behälterform und -größe sowie vom Deckelmaterial unabhängig ist. Bei den bisher bekannten Behältern aus Aluminiumband und Polypropylenfolie wurde dies mit Deckelmaterialien erreicht, welche entweder eine biaxial orientierte Polypropylenfolie oder einen Heißsiegellack enthielten.

Trotz der erstaunlich niedrigen Siegelnahtfestigkeiten wurden bei Abpackversuchen Verschlußsicherheiten erreicht, die in keiner Weise den bekannten Systemen nachstande. Dies wurde an Behältern ermittelt, welche mit Fischfertiggerichten gefüllt waren und einem 2-jährigen Lagertest unterworfen wurden. Die Behälter wurden nach dem Füllen mittels der sog. Doppelsiegelung verschlossen und konventionell sterilisiert. Ständige Überprüfungen der gelagerten Behälter auf Verschlußsicherheit (Auftreten sog. Bombagen), Korrosionserscheinungen sowie Haftungsverhalten der Polypropylenbeschichtung zeigten keinerlei Beanstandungen. Zusätzliche Abfüllungen mit aggressiven Testlösungen, z. B. 1 % Milchsäure oder 3 % Essigsäure + 1,5 % NaCl oder 0,5 % Weinsäure, zeigten weder bei Raumtemperatur noch bei erhöhten Temperaturen negative Ergebnisse.

Bei allen Versuchen wurden die gleich guten Ergebnisse erzielt, wie sie von den bekannten, mit Polypropylenfolie laminierten Behältern bekannt sind.

Selbstverständlich ist es möglich, die Extrusionsbeschichtung mit Polypropylen nicht nur auf Aluminiumband mit einer Dicke von 0,110 mm vorzunehmen, sondern für tiefziehbare Behälter je nach Legierungsqualität von Bändern im Dickenbereich von 0,070 bis 0,200 mm, auf Aluminiumdicken also, aus welchen für die im Handel üblichen tiefgezogenen, einteiligen Behälter hergestellt werden. Die gilt ebenso für die im Handel üblichen Deckelmaterialien von 0,050 bis 0,110 mm Aluminiumdicke. Das Schichtgewicht der Polypropylenbeschichtung kann sowohl für das Behälter — als auch Deckelmaterial von 20 bis 100g/m$^2$ reichen.

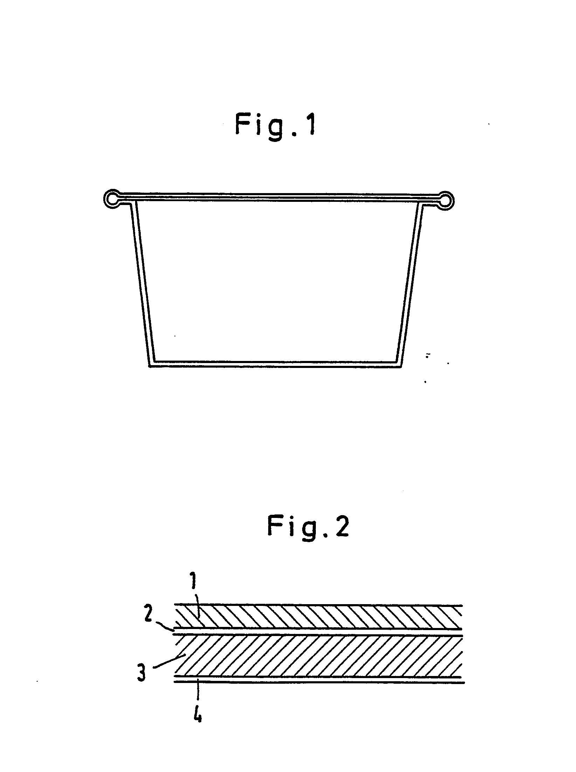

Die beigefügte Zeichnung zeigt in Fig. 1 einen Querschnitt durch den Behälter in Fig. 2 einen Querschnitt durch die Behälterwand.

Bei dem Ausführungsbeispiel besteht der tiefgezogene Behälter (Fig. 1) aus folgenden vier Einzelschichten : auf der Behälterinnenseite befindet sich die Polypropylenbeschichtung 1, welche mittels der haftvermittelnden Schicht 2 mit den Aluminiumband 3 verbunden ist. Die Behälteraußenseite ist einem Schutzlack 4 versehen (Fig. 2).

**Patentanspruch**

Tiefgezogener, einteiliger, mit Kunststoff versehener Aluminiumbehälter zur Aufnahme sterilisierbarer Nahrungsmittel oder anderer licht-, sauerstoff- oder aromaempfindlicher Füllgüter, dadurch gekennzeichnet, daß der Behälter aus Aluminiumband im Dickenbereich von 0,070 bis 0,200 mm auf der behältereinwärts gerichteten Seite mit einem Polypropylen (1) extrusionsbeschichtet ist, wobei das Schichtgewicht 20 bis 100 g/m$^2$ beträgt, daß zwischen Polypropylen (1) und Aluminium (3) als Haftvermittler ein Primer (2) mit einem Schichtgewicht von 1 bis 2 g/m$^2$ liegt und daß der Aluminiumbehälter einen Deckel aufweist, wobei das Deckelmaterial auf der behältereinwärts gerichteten Seite entweder mit Polypropylen (1) extrusionsbeschichtet ist, dessen Schichtgewicht 20 bis 100 g/m$^2$ beträgt und zwischen dem Polypropylen (1) und Aluminium (3) als Haftvermittler ein Primer (2) mit einem Schichtgewicht von 1 bis 2 g/m$^2$ liegt oder der Deckel mit einer heißsiegelfähigen Lackierung versehen ist.

**Claim**

A deep-drawn, one-piece aluminium container lined with a synthetic resin, for containing sterilisable foods or other substances sensitive to light, oxygen or aromas, characterised in that the container, deep-drawn from aluminium ribbon 0.070 to 0.200 mm thick, is covered on the inside by a polypropylene layer (1), using 20 to 100 g of polypropylene per square metre of surface, applied by extrusion-coating, there being interposed between the polypropylene (1) and the aluminium (3) an adhesion-promoting primer (2), using 1 to 2 g of primer per square metre of surface ; the container having a lid whose inside surface is covered either with polypropylene (1) applied by extrusion coating, using 20 to 100 g of polypropylene per square metre of surface, there being interposed between the polypropylene (1) and the aluminium (3) an adhesion-promoting primer (2), using 1 to 2 g of primer per square metre of surface, or with a lacquer capable of forming a heat seal.

**Revendication**

Récipient en aluminium, revêtu de matière plastique, moulé sous vide en une seule pièce pour contenir des denrées alimentaires stérilisables ou d'autres produits sensibles à la lumière, à l'oxygène ou ayant un arôme fugace, caractérisé en ce que le récipient réalisé à partir d'une bande d'aluminium d'épaisseur comprise entre 0,070 et 0,200 mm est revêtu par extrusion sur la face dirigée vers l'intérieur du récipient d'un polypropylène (1), dont le poids de couche représente 20 à 100 g/m$^2$, qu'un primer (2) d'un poids de couche compris entre 1 et 2 g/m$^2$ existe entre le polypropylène (1) et l'aluminium (3) comme promoteur d'adhérence et que le récipient en aluminium présente un couvercle, dans lequel le matériau de couvercle est revêtu par extrusion sur la face dirigée vers l'intérieur du récipient de polypropylène (1) dont le poids de couche vaut de 20 à 100 g/m$^2$ et qu'entre le polypropylène (1) et l'aluminium (3) existe en tant que promoteur d'adhérence un primer (2) d'un poids de couche compris entre 1 et 2 g/m$^2$ ou le couvercle est muni d'un vernis thermoscellable.

# Fig.1

# Fig.2